# EUROPEAN PATENT APPLICATION

(11) **EP 4 473 839 A1**
(43) Date of publication of application: **11.12.2024**
(21) Application number: 23425028.0
(22) Date of filing: 09.06.2023
(51) Int. Cl.: A21D 2/36, A21C 3/02, A21C 11/06, A21C 11/08, A21C 11/10, A21D 2/38, A21D 8/08, A21D 13/02, A21D 13/047, A21D 13/46

(54) **CRACKERS WITH HIGH CONTENT OF EDIBLE SEEDS AND METHOD FOR THE PRODUCTION THEREOF**

(71) Applicant: Barilla Sverige AB, 113 43 Stockholm (SE)
(72) Inventor: Navarro, Andrea, 682 33 Filipstad (SE); Drulyte, Donata, 682 33 Filipstad (SE); D'urso, Alessio, 113 43 Stockholm (SE); Morbarigazzi, Nadia, I-43124 Parma (IT); Torricelli, Roberto, 43122 Parma (IT)
(74) Representative: Botti & Ferrari S.p.A.

(57) **Abstract**

The invention relates to crackers having a high content of edible seeds and a process for the production thereof. The process comprises the steps of:
- soaking mucilage-producing seeds in water for a period of time sufficient to cause said seeds to produce a mucilage and optionally soaking cereal and/or pseudocereal flakes in water,
- mixing the soaked seeds and optionally the soaked cereal and/or pseudocereal flakes with flour, salt, optionally other seeds, and optionally additional ingredients in the presence of a sufficient water to form a dough (27),
- rolling out said dough (27) by passing the dough between at least one forming roller (17; 18) placed above a conveyor belt (9) whose surface is dusted with flour (30), thereby forming a sheet (29) of semi-finished product laid down on said conveyor belt (9),
- optionally surface patterning said sheet (29) of semi-finished product to form hollows (32) and/or holes into the surface of the patterned sheet (33),
- cutting said sheet (29,33) of said semi-finished product, optionally surface patterned, to form slices (35) of semi-finished product,
- baking said slices (35) of semi-finished product into an oven (15) and allowing the baked slices (36) to cool down until a moisture content of 2-4.5% is reached, thereby obtaining said crackers.

## Description

### Field of application

In its more general aspect, the present invention relates to domain of the food and bakery industry in the category of hard breads.

In particular, the invention relates to a cracker, such as a crispbread product, comprising edible seeds with a high content.

The present invention also relates to a process for the production of crackers, such as crispbread products, as above.

### Prior art

As is known, one of the most traditional forms of breads in the Nordic countries is cracker, such as crispbread. This type of product has been very widespread commercially for years and is therefore available in a large variety of forms. It is, in fact, one of the most popular bakery products consumed by both children and by adults, not only because of the simple taste, but also because of the nutritional value of some of their varieties. In recent years, a modernization of crispbread has occurred both in image and nutritional value and health claims.

It has been seen that industrial and artisanal bakeries are incorporating different ingredients to make crispbread relevant for modernization and also increase the added value perception. Different ingredients include for example rye, wheat, oat, barley, rice, potato starch, teff, spelt, buckwheat and corn. This is done with the aim of making crispbread more flavourful and for the final product to contain more nutrients.

In addition to a variety of flours, the incorporation of seeds has also been a popular choice and has been widely accepted by different consumer target groups. The consumers perceive seeds as a premium ingredient that provides health benefits and that is used for special occasions or consumed as a treat.

Moreover, the substitution of certain flours with gluten-free flours can target celiac consumers who also want to consume crispbread rich in seeds.

The traditional method of preparing crackers with seeds includes soaking a mix of seeds for a certain amount of time to create a gel. After that, the gel matrix may be mixed with flour to form a dough which is spread throughout a mold, usually in a very thin layer of rectangular shape, or rolled to obtain a sheet. The sheet preparation is then baked in a traditional oven for the time necessary for its baking. When cooled down, the finished product is broken into irregular pieces ready to be consumed.

US 2006/0088641 discloses a method for mass producing whole-seeds crackers comprising soaking mucilage-producing whole seeds in water for a period of time necessary to cause said seeds to produce a mucilage, mixing the seeds with ground seeds in the presence of sufficient water to form a dough having a moisture content between about 45% and about 55%, cooling the dough to a temperature greater than freezing, but less than about 45°F., extruding said dough at said temperature to form a sheet; and drying said extruded dough at a temperature not exceeding about 200°F.

However, the production of crackers, such as crispbreads, with seeds, is particularly difficult, especially when the content of seeds is high in the finished product (i.e. at least 50% by weight) and such seeds are part or the main component of the dough rather than just the topping.

A main difficulty is related to challenges in continuous sheeting of the dough due to its stickiness and conservation of its constituent components. The high stickiness of the dough makes it very difficult to sheet, extrude and/or to handle and thus the above preparation methods are not suitable for an industrial production.

Furthermore, the soaking of the seeds may require a lot of water to form the gel which results in that the baking of the dough sheet is long and difficult.

The purpose of the present invention is, thus, to provide a process for the production of crackers having a high content of edible seeds from a dough comprising flour and such seeds which can make easier handling and sheeting of the dough so as to be suitable for industrial production, thereby overcoming the drawbacks of the prior art preparation methods stated above.

Another purpose of the present invention is thus to provide a process for the production of crackers as above wherein baking of the dough can be improved so as to provide a finished product with the required texture characteristics, thickness and moisture content.

A further purpose of the present invention is to provide a cracker, such as a crispbread, having a high content of seeds having appropriate texture characteristics, thickness and moisture content.

### Summary of the invention

The above purposes are primarily achieved by a process for the production of crackers having a high content of edible seeds comprising the steps of:
- soaking mucilage-producing seeds in water for a period of time sufficient to cause said seeds to produce a mucilage and optionally soaking cereal and/or pseudocereal flakes in water,
- mixing the soaked seeds and optionally the soaked cereal and/or pseudocereal flakes with flour, salt, optionally other seeds and optionally additional ingredients in the presence of a sufficient water to form a dough,
- rolling out said dough by passing the dough between at least one forming roller, preferably between two opposite forming rollers, placed above a conveyor belt whose surface is dusted with flour, thereby forming a sheet of semi-finished product laid down on said conveyor belt,
- optionally surface patterning said sheet of semi-finished product to form hollows and/or holes into the surface of the patterned sheet,
- cutting said sheet of said semi-finished product, optionally surface patterned, to form slices of semi-finished product,
- baking said slices of semi-finished product into an oven and allowing the baked slices to cool down until a moisture content of 2-4.5% is reached, thereby obtaining said crackers.

In an embodiment, the above soaking step includes soaking mucilage-producing seeds in water for a period of time sufficient to cause said seeds to produce a mucilage and soaking cereal and/or pseudocereal cereal flakes in water.

In an embodiment, the above mixing step includes mixing other seeds, flour, salt and optionally additional ingredients in the presence of a sufficient water to form a semi-finished dough and then mixing the soaked seeds and optionally the soaked cereal and/or pseudocereal flakes with the said semi-finished dough to obtain said dough.

In an embodiment, the sheet of semi-finished product is surface patterned and the surface patterning is performed by passing said sheet conveyed by said conveyor belt through at least one pattern roller, preferably a plurality of pattern rollers, having a plurality of projecting elements suitable to form hollows into the surface of the sheet.

In an embodiment, the cutting step includes cutting the sheet of semi-finished product conveyed by said conveyor belt longitudinally, i.e. along the advance direction of the conveyor belt, to provide a plurality of separated and spaced apart stripes and then cutting said stripes transversally, i.e. perpendicularly to the advance direction of the conveyor belt, while the stripes are conveyed by the conveyor belt, to obtain slices having a predetermined length and width.

In an embodiment, after the cutting step and before the baking step the slices are transferred from said conveyor belt to a movable support suitable to move the slices to the oven, wherein the support is moved at a speed higher than that of said conveyor belt.

In an embodiment, the process further includes packaging said crackers in groups of a predetermined number in a package, preferably in a flow-pack.

The present invention also relates to a cracker, such as crispbread product obtainable from a production process as described above.

Further characteristics and advantages of the present invention will be apparent from the following description of some embodiments given by way of example and not of limitation with reference to the enclosed drawings.

### Brief description of the drawings:

In the drawings:
- Figure 1 shows schematically an example of plant that can be used to implement the process of the present invention;

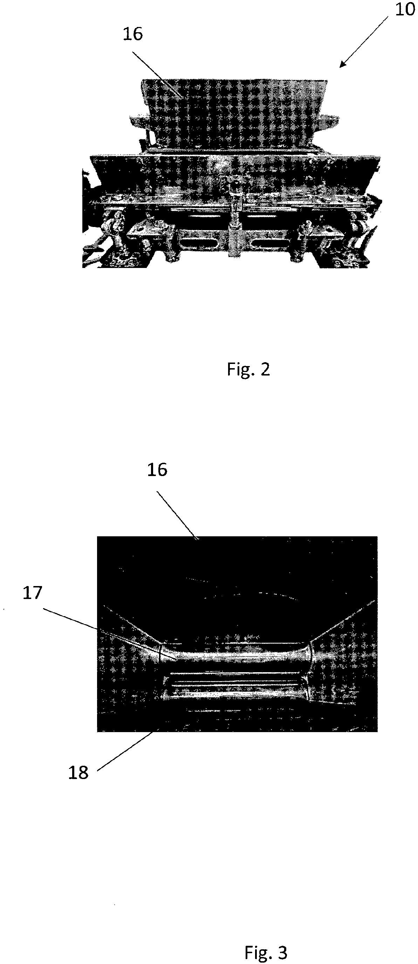

- Figure 2 shows a part of the plant of Figure 1 concerning forming station;
- Figure 3 shows a particular of the forming station of Figure 2 concerning forming rollers;
- Figure 4 shows another particular of the plant of Figure 1 concerning a patterning roller;
- Figure 5 shows a part of the plant of Figure 1 including longitudinal cutters;
- Figure 6 shows a transversal cutter of the plant of Figure 1;
- Figure 7 shows a part of the plant of Figure 1 including adjacent conveyor belts;

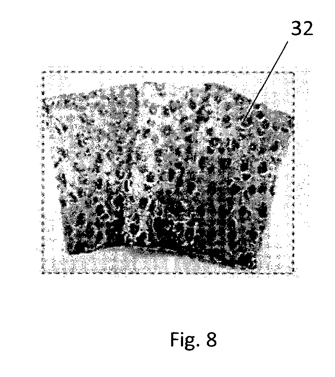

- Figure 8 is a view of crackers produced with the process according to the invention.

### Detailed description

In the process according to the invention, the edible seeds used in the soaking steps can be any seeds producing mucilage when soaked in water. Mucilage-producing seeds include flaxseeds, chia seeds, basil seeds (sabja seeds), other edible seeds of the genus Linum, psyllium and other edible seeds of the genus Plantago and mixtures thereof.

Preferably, the mucilage-producing seeds are chosen from chia seeds, flaxseeds and mixtures thereof.

Advantageously, the mucilage-producing seeds are soaked for a period of time to create a gel (mucilage) which is useful as a binder for the dough.

In the present disclosure, the term "cereal" refers to any plant of the grass species cultivated for the edible components of its grain (botanically, a type of fruit called a caryopsis), which is composed of an endosperm, a germ, and a bran.

In the present disclosure, the term "pseudocereal" refers to any plant of the non-grass species that can be used as cereals to produce starchy grain suitable for human food. Their seeds can be ground into flour, processed in a conventional manner to form flakes and otherwise used as a cereal. Pseudocereals are characterized by a high content of starch which determines their functional properties such as high viscosity and water-binding capacity. Pseudocereals are gluten-free and they can be used to make 100% gluten-free products. Prominent pseudocereals include amaranth, quinoa and buckwheat.

In the process according to the invention, the cereal flakes and/or the pseudocereal flakes are useful to produce after soaking a starchy matrix (e.g. a continuous matrix) in the dough acting as a binder for the dough in combination with the mucilage produced by the soaked mucilage-producing seeds.

Preferably, the cereal flakes and/or the pseudocereal flakes are chosen from the group consisting of quinoa flakes, oat flakes and combinations thereof.

Preferably, in the process of the invention both mucilage-producing seeds and cereal and/or pseudocereal flakes are soaked in the aforementioned soaking step.

According to the process of the invention, the mucilage-producing seeds are mixed with water and soaked for a period of time sufficient to produce a mucilage which is useful as a binder for the dough. Preferably, the soaking time is from 10 minutes to 120 minutes, more preferably 90 minutes. The cereal flakes and/or the pseudocereal flakes, if any, are preferably mixed with the mucilage-producing seeds and soaked together for the prescribed soaking time as indicated above. More in detail, the above seeds and the cereal flakes and/or the pseudocereal flakes, if any, are mixed with water and may be left to rest and/or mixed for a few minutes, for example from 2 minutes to 10 minutes, and then left to rest again for the prescribed soaking time to produce mucilage (in the case of the mucilage-producing seeds).

In the process of the invention, the other seeds may be any edible seed that does not substantially produce mucilage. Such seeds may be added to provide functional characteristics to the dough and/or the final product and/or to improve the production process. For example, the other seeds can be used to add body and texture.

Examples of other seeds that can be used in the process of the invention include pumpkin seeds, sunflower seeds, sesame seeds, hemp seeds, watermelon seeds, melon seeds, poppy seeds, millet seeds, amaranth seeds, buckwheat seeds, safflower seeds and mixtures thereof.

The mucilage-producing seeds are usually used as whole seeds and have preferably a size up to 4 mm, preferably between 1 mm and 3 mm. For example, flaxseeds typically are about 2-3 mm and chia seeds are roughly 1-2 mm, so they are already small in size and there is no need to reduce the size.

The other seeds may be used as whole seeds or ground seeds and have preferably a size up to 4 mm, preferably between 1 mm and 4 mm. This seed size is important in order to get the dough through the forming rollers to form a sheet of appropriate thickness.

According to an embodiment of the present invention, the other seeds are primarily mixed with flour, salt and optionally additional ingredients in the presence of a sufficient water to form a semi-finished dough.

The flour can be generally obtained by any cereal and/or pseudo cereal and is normally a gluten-free cereal and/or pseudocereal flour. Gluten-free flours that can be used in the process according to the invention include rice flour, corn flour, lentil flour, buckwheat flour, millet flour, amaranth flour, quinoa flour, chickpea flour, teff flour, tapioca flour, banana flour, arrowroot flour, potato starch and any of their combination.

However, if desired, gluten containing flours can also be used in the process according to the invention such as wheat flour, spelt flour, oats flour, rye flour, barley flour and any of their combination. It is also possible to use any combination of at least one gluten-free flour and at least one gluten-containing flour.

The term "flour" also includes starches, such as potato starch, which can be used in the process of the invention as well in addition to or in substitution for any of the cereal and/or pseudocereal flours indicated above.

Preferably, the flour used in the process according to the invention is at least one gluten-free flour. Preferably, the gluten-free flour is selected from rice flour, lentil flour, corn flour and combinations thereof. More preferably, the gluten-free flour is rice flour.

The additional ingredients can be any functional ingredient such as seasonings to provide a desired taste and/or flavor, rheology modifiers to control for example viscosity, water-binding capability, tensile strength and/or cohesiveness of the finished dough, etc.

Seasoning ingredients include rosemary extract, pepper, cummin, oregano, thyme extract, sage extract, dill extract, cinnamon powder, cardamom powder, onion powder, paprika powder, lemon extract, lime extract, chili powder, garlic powder, etc.

Rheology modifiers for the dough include enzymes, such as xylanase, amylase and protease, lecithin, guar gum, xanthan gum, fibers, etc.

According to an embodiment of the present invention, the soaked seeds and the cereal and/or pseudocereal flakes, if any, as a slurry (i.e. with the remaining soaking water) or without the remaining soaking water (e.g. when all soaking water has been absorbed by the seeds) are mixed with the semi-finished dough comprising the other seeds, if any, flour, salt and optional additional (functional) ingredients in the presence of water to form a dough.

Such mixing can be carried out with any conventional mixer and with appropriate mixing times depending on the formulation and stickiness of the dough. An appropriate mixer is a spiral mixer but also a whisk mixer may be used depending on the stickiness of the dough.

Furthermore, the mixing can be carried out in more steps alternated to resting steps of the dough being mixed as required so as to obtain a dough having a substantially uniform structure.

The amount of water can be adjusted in the soaking step and/or in the mixing with the other seeds, if any, flour, salt and optional additional (functional) ingredients to form the semi-finished dough so as to obtain a dough having a moisture content preferably from 40% to 60%, more preferably from 45% to 55%.

Normally, a major part of water, e.g. two thirds, is used in the soaking step of the mucilage-producing seeds and optionally cereal and/or pseudocereal flakes while the remaining minor part of water, e.g. one third, is used for obtaining the semi-finished dough.

The amount of flour in the semi-finished dough is adjusted so as to have a content of flour in the dough up to 50%, preferably from 20% to 40%, more preferably from 30 to 40% wherein the percentages are by weight on the dry weight of the dough.

The amount of overall seeds (mucilage-producing seeds and optionally other seeds and/or seeds from pseudocereals processed in form of flakes such as quinoa flakes) is adjusted in the soaking step and/or in the mixing step to form the semi-finished dough so as to obtain a seed content in the dough of at least 50%, preferably from 60% to 80%, more preferably from 60 to 70% wherein the percentages are by weight on the dry weight of the dough.

The amount of salt added in the mixing step can be adjusted so as to obtain a seed content in the dough and in the final product (cracker) up to 2%, preferably from 1.2% to 1.9%, wherein the percentages are by weight on the dry weight of the dough or finished product.

According to an aspect of the present invention, the dough is rolled out between two opposite forming rollers to form a sheet of semi-finished product.

This is carried out by passing the dough between two opposite forming rollers placed above a conveyor belt whose surface is dusted with flour, thereby forming a continuous sheet of semi-finished product of predetermined thickness and weight which is laid down on said conveyor belt.

Preferably, the forming rollers are counter-rotating upper and lower rollers operating at different speeds, i.e one roller (e.g. upper roller) turning faster and the other roller (e.g. lower roller) turning slower. In particular, the roller turning faster may operate at a speed from 5% to 15% higher than the speed of the roller turning slower.

However, the speed of the rollers can be adjusted by the person skilled in the art according to its general knowledge depending on e.g. the dough batch, size (e.g. diameter) of the rollers and/or environmental factors (e.g. temperature). The speed of the conveyor belt can also be adjusted accordingly by the person skilled in the art so as to form the sheet of semi-finished product with the desired thickness and weight.

Advantageously, the use of forming rollers allows to sheet the dough easier and with a production capability appropriate for an industrial application. In addition, the sheet of semi-finished product coming out of the rollers is prevented from sticking to the conveyor belt on which it is laid down due to the presence of a layer of dusting flour previously applied on the surface of the conveyor belt.

Preferably, the conveyor belt is covered with a layer of dusting flour having a thickness comprised from 1 mm to 2 mm, more preferably 1.5 mm.

The dusting flour can be of any of the flours mentioned above which are used for obtaining the semi-finished dough and is preferably the same flour used to obtain said semi-finished dough.

Advantageously, the weight for surface unit of the rolled-out dough and its thickness can be controlled periodically during the process with conventional means, such as a stamp having a circle-shaped cut. The dough piece cut by the stamp is expected to have a predetermined weight depending on the diameter of the circle-shaped cut and if the weight is too high or too low than expected, the speed of the forming rollers can be adjusted accordingly.

After the rolling out of the dough, the sheet of semi-finished product so obtained is preferably surface patterned to form hollows and/or holes, preferably hollows, into the surface of the sheet.

According to an aspect of the present invention, this surface patterning is performed by at least one pattern roller, preferably a plurality of pattern rollers, each roller having a plurality of projecting elements distributed on its circumferential surface suitable to form hollows into the surface of the sheet.

More in detail, the sheet of semi-finished product coming from the rolling station is conveyed by the conveyor belt to a patterning station having one pattern roller as above or preferably a plurality of pattern rollers as above which are arranged in series along the advance direction of the conveyor belt.

The projecting elements of each pattern roller intercept the sheet of semi-finished product moved by the conveyor belt and compress its upper surface (i.e. the surface to be patterned), thereby forming hollows into the surface of the sheet.

The projecting elements may have any shape which is suitable to create hollows and/or holes in the surface of the sheet of semi-finished product. For example, the projecting elements can be needles, pins, pillars or other shapes functionally equivalent. In addition, the projecting elements may be distributed on the circumferential surface of the roller according to any predetermined pattern, for example as rows of parallel elements, helicoidally, etc.

It can be important to add dusting flour to the surface of the sheet of semi-finished product to be patterned so as to prevent the pattern roller from sticking to the dough. Alternatively, or in the addition, the patterning roller can be covered with dusting flour to prevent dough from sticking to it.

Preferably, both the sheet of semi-finished product to be patterned and the at least one pattern roller are covered with dusting flour.

In this way, the surface patterning of the sheet of semi-finished product can be carried out in an easier manner and with appropriate production capability without having the sheet stuck to the pattern roller(s) and without losing the consistency and texture imparted to the dough.

In addition, advantageously, the patterning aids to bake out water from the sheet during the baking step, thereby reducing baking time and providing finished products (crackers) with the required texture characteristics, and moisture content.

The sheet of the semi-finished product obtained after rolling out and/or patterning step can have an overall thickness (i.e. in the parts where hollows are not present) up to 10 mm, preferably from 3 mm to 8 mm, including dusting flour. More preferably, such semi-finished product has an overall thickness up to 7 mm, including dusting flour.

According to the present invention, after the surface patterning or after the rolling out if the surface patterning is not carried out, the sheet of semi-finished product is cut to form slices having a predetermined length and width suitable for the packaging after baking of the slices.

If desired, additional salt can be added to the patterned surface of the sheet of semi-finished product so as to obtain a salt topping which provides flavor to the final product after baking.

Preferably, the cutting step includes cutting the sheet of semi-finished product coming from the surface patterning or coming from the rolling out if the surface patterning is not carried out and conveyed by said conveyor belt longitudinally, i.e. along the advance direction of the conveyor belt, to provide a plurality of spaced stripes and then cutting said stripes transversally, i.e. perpendicularly to the advance direction of the conveyor belt, while the stripes are conveyed by the conveyor belt, to obtain slices having a predetermined length and width.

The longitudinal cut to form stripes can be advantageously carried out by means of a plurality of longitudinal cutters arranged downstream of the pattern roller(s) or downstream of the forming rollers if the pattern roller(s) is/are absent, said longitudinal cutters being arranged above and close to the surface of the conveyor belt conveying the semi-finished product at predetermined distance to each other along the width of the conveyor belt. The longitudinal cutters intercept the sheet of semi-finished product moved from the conveyor belt and coming from the pattern roller(s) or the forming rollers (if the pattern roller(s) is/are absent) and cut such sheet along the advance direction of the belt into substantially parallel and spaced apart stripes of semi-finished product.

The transversal cut to form slices of the semi-finished product can be carried out by a transversal cutter of the guillotine type arranged downstream of the longitudinal cutters.

Such transversal cutter is extended along the width of the conveyor belt and is movable at a preset periods of time from an upper (rest) position wherein the cutter is above the conveyor belt and a lower (operative) position wherein the cutter is lowered up to intercept and cut the stripes moved by the conveyor belt to form slices of the semi-finished product.

By adjusting the distance of the longitudinal cutters and the operating time of the transversal cutter between consecutive transversal cuttings, slices of predetermined length and width suitable for packaging can be obtained.

According to another aspect of the present invention, the slices obtained from the cutting step are preferably transferred from said conveyor belt to an adjacent movable support for conveying the slices to a baking oven, wherein the movable support is operated at a speed higher than that of said conveyor belt.

This advantageously allows to increase the space between contiguous slices, in particular the space along the width of the contiguous slices, thereby preventing such slices from sticking and baking together. In fact, it should be noted that unlike standard crackers made from doughs of conventional flours (e.g. rye/wheat), slices comprising high contents of seeds (at least 50% by weight) as in the present invention, do not shrink during baking. Therefore, it may be important to create more space between the slices before their baking to prevent the slices to stick together.

The movable support may be of any type, for example it can be a second conveyor belt, a net or other support functionally equivalent.

The separated slices transferred to the movable support are conveyed by the movable support to an oven such as a tunnel oven for baking. This baking step can be carried out at a temperature from 250°C to 500°C depending on the oven type for a time comprised from 8 minutes to 16 minutes, preferably from 10 minutes to 12 minutes, depending on the thickness and weight of the slices.

The oven may include at least one baking zone, preferably a plurality of baking zones, each having upper radiant heating tubes and lower heating plates, and at least one convection zone, preferably a plurality of convection zones, each having recirculation fans.

Each baking zone can operate at a temperature from 250°C to 500°C and allows to bake the slices while each convection zone can operate at a lower temperature of recirculation air, preferably from 190°C to 260°C, e.g. 225°C, allowing to dry out more the slices coming from the baking zone(s).

However, it should be noted that ovens having different characteristics and/or configurations may also be used for the baking step, such as line gas ovens, rotation ovens etc.

After baking, the baked slices of semi-finished product are allowed to cool down until a moisture content of 2-4.5% is reached, thereby obtaining the crackers according to the invention.

For example, the baked slices can be allowed to cool down on a net arranged at the exit of the oven at a room temperature (e.g. 25°C or lower) until the desired moisture content is reached.

The crackers so obtained can then be packaged in groups of a predetermined number in conventional packaging, for example in standard flow-packs.

Advantageously, the process according to the invention allows to obtain a good control of the size, weight and moisture content of the slices so as the baked slices can fit in their packages, thereby avoiding difficulties in packaging operations and/or rupturing of the packages which may occur, for example, if the baked slices have a higher weight and/or size than targeted.

The present invention also relates to a cracker, such as crispbread product, obtainable from a production process as described above.

This cracker is characterized in that it has a high content of seeds which is at least 50%, preferably from 60% to 80%, wherein the seeds have a size up to 4 mm, preferably from 1 mm to 4 mm, and a content of salt, including possible topping, up to 2%, preferably from 1.4% to 1.9%.

The cracker according to the invention has also a thickness from 3 mm to 10 mm, preferably from 3 mm to 8 mm and a patterned surface including hollows.

Advantageously, the crackers obtained according to the invention shows good texture characteristics as they have non-brittle texture and have satisfactory crispness and substantially uniform thickness. In addition, the crackers have good organoleptic characteristics, in particular good taste and flavor.

Figure 1 shows schematically a plant that can be used to implement the process of the present invention, which is indicated as a whole with reference number 1.

The plant 1 includes a soaking unit 2 which receives mucilage-producing seeds, optionally cereal and/or pseudocereal flakes and water through the flow line(s) 4 for the soaking step, and a first mixing unit 3 which receives flour, salt, optionally other seeds, additional water and optionally additional ingredients through the flow line 5 to form a semi-finished dough.

The plant 1 further includes a second mixing unit 6 which receives the soaked seeds and optionally the soaked cereal and/or pseudocereal flakes exiting the soaking unit 2 through the flow line 7 and the semi-finished dough exiting the first mixing unit 3 though the flow line 8. The feedings into the second mixing unit are processed (mixed) to form the dough.

The plant 1 further includes a first conveyor belt 9 movable along the advance direction A, above which a forming station 10, a patterning station 11, a first cutting station 12 and a second cutting station 13 as disclosed below are arranged, from upstream to downstream, along said advance direction A, and a second conveyor belt 14 arranged close (adjacent) to the first conveyor belt 9 and movable along the same advance direction A, on which a tunnel oven 15 is arranged.

The forming station 10 includes a hopper 16 wherein, in its lower part, two opposite rollers 17, 18 are arranged so as to create a sheeting space of a preset width between them. In this embodiment, the rollers are also arranged staggered with an upper roller 17 and a lower roller 18. However, in other embodiments, the rollers 17,18 may be arranged aligned, if required.

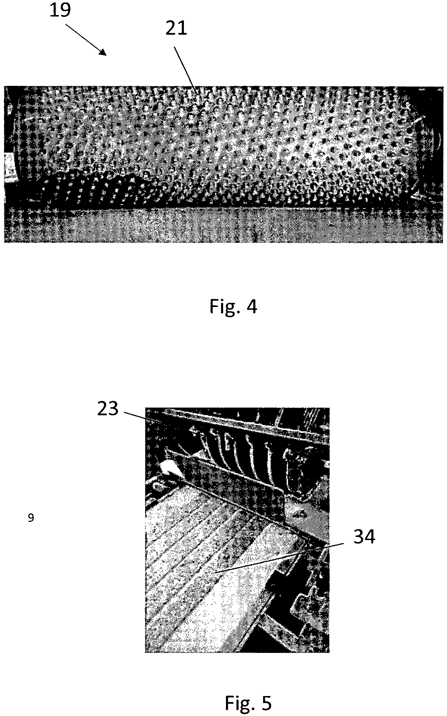

The patterning station 11 includes two pattering rollers 19 associated to respective hoppers 20 which are arranged in series along the advance direction of the conveyor belt 9. Each patterning roller 19 is provided on its circumferential surface with protruding elements 21 which, in this example, are in the form of series of parallel pins distributed helicoidally on the circumferential surface of the patterning roller 19 (see Figure 4).

In the present embodiment, each patterning roller 19 is arranged in the lower part of the associated hopper 20 and protrudes from the associated hopper 20 from below. In use of the plant 1, each hopper 20 is fed with dusting flour 22 which flows downstream, thereby covering the rotating circumferential surface of the roller 19.

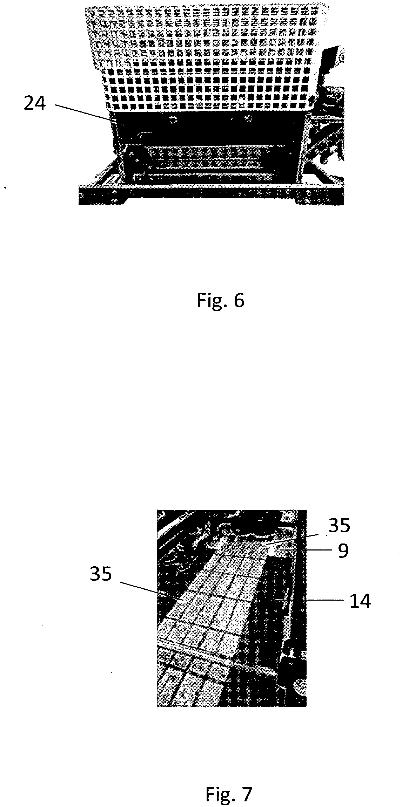

The first cutting station 12 includes longitudinal cutters 23 arranged above and close to the surface of the conveyor belt 9 at predetermined distance to each other along the width of the conveyor belt 9 (see Figure 5) while the second cutting station 13 is arranged downstream of the first cutting station 12 and includes a transversal guillotine cutter 24 (see Figure 6) movable at preset periods of time from a upper (rest) position wherein the cutter 24 is above the conveyor belt 9 and a lower (operative) position wherein the cutter is lowered to cut the stripes of dough passing below it on the surface of the conveyor belt 9.

The plant 1 further includes a first hopper 25 arranged above the conveyor belt 9 upstream of the forming station 10 and a second hopper 26 arranged above the conveyor belt 9 between the forming station 10 and the patterning station 11. In use of the plant 1, the first hopper 25 and the second hopper 26 are both fed and contains dusting flour 22.

According to the process of the invention, a dough 27 formed in the second mixing unit 6 is discharged, through the flow line 28 into the hopper 16 of the forming station 10. Here, the dough 27 is processed (sheeted) between the forming rollers 17 and 18 to form a continuous sheet 29 of semi-finished product which is laid down on the conveyor belt 9 over a layer 30 of dusting flour 22 which is continuously fed on the surface of the conveyor belt 9 from the first hopper 25.

The sheet 29 of semi-finished product is then conveyed to the patterning station 11 for surface patterning. Before reaching the patterning station 11, the surface to be patterned of the sheet 29 is covered with a layer 31 of dusting flour coming from the second hopper 26.

In the patterning station 11, the sheet 29 of semi-finished product encounters the pattern rollers 19 and hollows or cavities 32 are created in the surface of this sheet 29 by said rollers 19.

The patterned sheet 33 so obtained is then conveyed by the conveyor belt 9 to the first cutting station 12 where the longitudinal cutters 23 intercept the patterned sheet 33 of semi-finished product and cut it along the advance direction A of the conveyor belt 9 into substantially parallel and spaced apart stripes 34 of semi-finished product.

The stripes 34 of semi-finished product then proceed to the second cutting station 13, moved by the conveyor belt 9. In the second cutting station 13, the stripes 34 are cut by the guillotine cutter 24 to form slices 35 of the semi-finished product.

Advantageously, the second cutting station 13 including the guillotine cutter 24 is arranged near to the end of the first conveyor belt 9. The slices 35 exiting the second cutting station 13 are transferred from the first conveyor belt 9 to the adjacent second conveyor belt 14 which operates at a speed higher than that of the first conveyor belt 9 thereby obtaining a good separation between the slices 35 on the second conveyor belt 14 (see Figure 7).

The slices 35 placed on the second conveyor belt 14 are conveyed to the oven 15 where they are baked. The baked slices 36 (crackers) exiting from the oven 15 are then allowed to cool down, for example on a net (not shown) until they reach the targeted moisture content and are subsequently packaged in a packaging station (not shown) in groups of slices 36 in a conventional package.

### Example

A dough having the components and related amounts as indicated in the following Table 1 was prepared.

**Table 1**

| Raw material name | Weight (Kg) | Comments |
|---|---|---|
| White quinoa flakes | 14.50 | |
| Yellow flaxseeds | 19.80 | Whole seed |
| Salt | 1.29 | |
| Pumpkin seeds | 14.35 | In bits about 4mm |
| Sunflower seeds | 14.35 | In bits about 4mm |
| Rice flour | 37.00 | |
| Water | 87.50 | |

In this preparation, white quinoa flakes and yellow flaxseeds were individually soaked in a respective quote of the water (22.50 kg each). The soaking was carried out by mixing the seeds with water for 2 minutes, leaving the seeds to rest for 10 minutes, mixing again for 2 minutes, and then soaking for 90 minutes.

Separately, a semi-finished dough was prepared by mixing pumpkin seeds, sunflower seeds, rice flour, salt and the rest of water (42.50 Kg). The semi-finished dough and the soaked seeds were then mixed to form the dough. This was carried out by mixing the above components for 3 minutes, leaving the mixed ingredients to rest for 10 minutes and then mixing again for 10 minutes.

The dough was sheeted in the forming station between an upper roller and a lower roller operating at different speeds (upper roller turning faster than the lower roller) to form a sheet of semi-finished product having a thickness of about 3-4 mm. This sheet was laid down on a first conveyor belt whose surface was covered with dusting flour.

The sheet of semi-finished product was then moved by the first conveyor belt to the patterning station while the surface to be patterned was covered with dusting flour. In the patterning station, the sheet of semi-finished product was surface patterned by means of two pattern rollers arranged in series along the advance direction of the first conveyor belt, the circumferential surface of those pattern rollers being covered with dusting flour, to provide hollows in the surface of the sheet. The patterned sheet was then cut into 63 mm width and 118 mm length slices by means of longitudinal cutters and a transversal cutter.

The slices so obtained were then transferred on an adjacent second conveyor belt running faster than the first conveyor belt to create a space between the slices of about 5 mm.

The slices were then baked into an oven comprising three separated baking zones operating each at a temperature between 415°C and 500°C and two convection zone operating with recirculating air at a temperature of about 225°C. The slices were baked into the baking zones for 10-12 minutes and then dried into the convection zones. At the exit of the oven, the baked slices (crackers) were allowed to cool down on a net at a temperature of about 25°C reaching a moisture content of about 3.5%.

The finished products (crackers) had each a size of about 61 mm width and 114 mm length and a weight of about 20 g.

Such crackers had a non-brittle texture, satisfactory crispness, and substantially uniform thickness. In addition, the crackers had good taste and flavor.

## Claims

1. Process for the production of crackers having a high content of edible seeds comprising the steps of:
- soaking mucilage-producing seeds in water for a period of time sufficient to cause said seeds to produce a mucilage and optionally soaking cereal and/or pseudocereal flakes in water,
- mixing the soaked seeds and optionally the soaked cereal and/or pseudocereal flakes with flour, salt, optionally other seeds, and optionally additional ingredients in the presence of a sufficient water to form a dough (27),
- rolling out said dough (27) by passing the dough between at least one forming roller (17; 18) placed above a conveyor belt (9) whose surface is dusted with flour (30), thereby forming a sheet (29) of semi-finished product laid down on said conveyor belt (9),
- optionally surface patterning said sheet (29) of semi-finished product to form hollows (32) and/or holes into the surface of the patterned sheet (33),
- cutting said sheet (29) of said semi-finished product, optionally surface patterned, to form slices (35) of semi-finished product,
- baking said slices (35) of semi-finished product into an oven (15) and allowing the baked slices (36) to cool down until a moisture content of 2-4.5% is reached, thereby obtaining said crackers.

2. Process according to claim 1, wherein said mixing step includes mixing the other seeds, flour, salt and optionally additional ingredients in the presence of a sufficient water to form a semi-finished dough and then mixing the soaked seeds and optionally the soaked cereal and/or pseudocereal flakes with said semi-finished dough to obtain said dough (27).

3. Process according to claim 1 or 2, wherein said dough (27) is rolled out by passing the dough between two opposite forming rollers (17,18), said rollers (17,18) being counter-rotating opposite upper and lower rollers operating at different speeds.

4. Process according to anyone of the preceding claims, wherein said conveyor belt (9) is covered with a layer (30) of dusting flour having a thickness comprised from 1 mm to 2 mm, preferably 1.5 mm.

5. Process according to anyone of the preceding claims, wherein said sheet (29) of semi-finished product is surface patterned and the surface patterning is performed by passing said sheet (29) conveyed by said conveyor belt (9) through at least one pattern roller (19), preferably a plurality of patter rollers (19), having projecting elements (21) suitable to form hollows into the surface of the sheet (29).

6. Process according to claim 5, wherein before the patterning step dusting flour (22,31) is added to the surface of the sheet (29) of semi-finished product and/or to the at least one pattern roller (19).

7. Process according to anyone of the preceding claims, wherein said sheet (29,33) of semi-finished product, optionally surface patterned, has a thickness up to 10 mm, preferably from 3 mm to 8 mm.

8. Process according to anyone of the preceding claims, wherein said cutting step includes cutting the sheet (29,33) of semi-finished product coming from the surface patterning or coming from the rolling out if the surface patterning is not carried out and conveyed by said conveyor belt (9) longitudinally, i.e. along the advance direction (A) of the conveyor belt (9), to provide a plurality of separated and spaced stripes (34) and then cutting said stripes (34) transversally, i.e. perpendicularly to the advance direction (A) of the conveyor belt (9), while the stripes (34) are conveyed by the conveyor belt (9), to obtain slices (35) having a predetermined length and width.

9. Process according to anyone of the preceding claims, wherein after the cutting step and before the baking step, the slices (35) are transferred from said conveyor belt (9) to an adjacent movable support (14) for conveying the slices (35) to said oven (15), wherein the movable support (14) is operated at a speed higher than that of said conveyor belt (9).

10. Process according to anyone of the preceding claims, wherein said slices (35) are baked into said oven at a temperature from 250°C to 500°C for a time comprised from 8 minutes to 16 minutes, preferably from 10 minutes to 12 minutes.

11. Process according to anyone of the preceding claims, wherein the mucilage-producing seeds are chosen from the group consisting of flaxseeds, chia seeds, basil seeds (sabja seeds), other edible seeds of the genus Linum, psyllium and other edible seeds of the genus Plantago and mixtures thereof and wherein said cereal and/or pseudocereal flakes are chosen from the group consisting of quinoa flakes, oat flakes and combinations thereof.

12. Process according to anyone of the preceding claims, wherein the other seeds are chosen from the group consisting of pumpkin seeds, sunflower seeds, sesame seeds, hemp seeds, watermelon seeds, melon seeds, poppy seeds, millet seeds, amaranth seeds, buckwheat seeds, safflower seeds and mixtures thereof.

13. Process according to anyone of the preceding claims, wherein the mucilage-producing seeds have a size up to 4 mm, preferably between 1 mm and 3 mm, and the other seeds have a size up to 4 mm.

14. Process according to anyone of the preceding claims, wherein the flour is a gluten-free flour selected from the group consisting of rice flour, corn flour, lentil flour, buckwheat flour, millet flour, amaranth flour, quinoa flour, chickpea flour, teff flour, tapioca flour, banana flour, arrowroot flour, potato starch and combination thereof, said gluten-free being preferably rice flour.

15. Process according to anyone of the preceding claims, wherein said dough has a content of flour up to 50%, preferably from 20% to 40%, more preferably from 30 to 40%, a content of overall seeds of at least 50%, preferably from 60% to 80%, more preferably from 60 to 70% and a content of salt up to 2%, preferably from 1.2% to 1.9%, wherein the percentages are by weight on the dry weight of the dough.

16. Process according to anyone of the preceding claims, further including packaging said crackers in groups of a predetermined number in a package, preferably in a flow-pack.

17. Cracker obtainable by the process according to anyone of the preceding claims 1 to 15.

18. Cracker according to claim 17, comprising at least 50%, preferably from 60% to 80%, of seeds, wherein the seeds have a size up to 4 mm, and up to 2% of salt, preferably from 1.4% to 1.9%.

19. Cracker according to claim 17 or 18 having a thickness from 3 mm to 10 mm, preferably from 3 mm to 8 mm and a patterned surface including hollows.
